# EUROPÄISCHE PATENTSCHRIFT

(11) **EP 3 559 525 B1**
(45) Veröffentlichungstag und Bekanntmachung des Hinweises auf die Patenterteilung: **17.02.2021**
(21) Anmeldenummer: 17818522.9
(22) Anmeldetag: 14.12.2017
(51) Int. Cl.: F16K 39/02, F02B 37/16, F16K 31/06, F16K 1/44

(54) **VENTIL**
VALVE
VANNE

(30) Priorität: 22.12.2016 DE 102016226080
(43) Veröffentlichungstag der Anmeldung: 30.10.2019
(73) Patentinhaber: Vitesco Technologies GmbH, 30165 Hannover (DE)
(72) Erfinder: BONANNO, Rosario, 65812 Bad Soden (DE)
(86) Internationale Anmeldenummer: PCT/EP2017/082871
(87) Internationale Veröffentlichungsnummer: WO 2018/114612

(56) Entgegenhaltungen:
- WO-A1-92/17721
- WO-A1-2016/106314
- CA-A1- 2 864 569
- DE-A1- 2 417 618
- DE-A1-102011 086 313
- DE-A1-102014 226 885
- DE-B3-102007 002 432
- DE-B3-102009 011 938
- JP-A- H0 211 972
- US-A- 3 737 141

## Beschreibung

Gegenstand der Erfindung ist ein Ventil mit einem Gehäuse, einem in dem Gehäuse angeordneten Solenoid, einem von dem Solenoid bewegbaren Stift, einem mit dem Stift verbundenen Schließglied, einem mit dem Gehäuse verbundenen zweiten Gehäuseteil, welches so angeordnet ist, dass es das Schließglied in der geschlossenen Position des Ventils umgibt. Bespielsweise beschreibt das Dokument DE 10 2009 011938 B3 ein Schubumluftventil nach dem Stand der Technik.

Solche Ventile werden unter anderem als Schubumluftventil am Turbolader in Kraftfahrzeugen eingesetzt, um im Schubbetrieb einen Bypass zur Saugseite freizugeben und sind somit bekannt. Um ein zu starkes Abbremsen des Turboladers zu verhindern aber auch ein schnelles Anfahren zu gewährleisten, ist ein schnelles Öffnen und Schließen des Ventils eine wesentliche Voraussetzung. Hierzu ist es bekannt als Schließglied einen Kolben zu verwenden, der im geschlossenen Zustand auf einem Ventilsitz aufliegt. Der Ventilsitz wird vom Gehäuse des Turboladers gebildet, an dem das Ventil angeflanscht wird. Darüber hinaus muss der axial verschiebliche Kolben gegen das Gehäuse abgedichtet sein. Hierzu ist es bekannt, in dem Gehäuse eine V-förmige Dichtung anzuordnen, deren Schenkel jeweils am Gehäuse und an der Mantelfläche des Kolbens anliegen. Durch die Vorspannung der beiden Schenkel wird die Dichtwirkung erzielt. Nachteilig hierbei ist, dass die am Kolben anliegende Dichtlippe des einen Schenkels infolge der Kolbenbewegung beim Öffnen und Schließen Reibung ausgesetzt ist, was einen erhöhten Verschleiß zur Folge hat. Derartige Ventile besitzen dadurch eine über die Lebensdauer zunehmende, unerwünschte Leckage.

Der Erfindung liegt daher die Aufgabe zugrunde, ein Ventil mit verbesserter Dichtfunktion zu schaffen, welches insbesondere über die Lebensdauer eine deutlich verringerte Leckage aufweisen soll.

Gelöst wird die Aufgabe dadurch, dass das zweite Gehäuseteil in seiner Mantelfläche eine Öffnung aufweist und an seinem dem Gehäuse abgewandten Ende eine radial umlaufende Dichtfläche besitzt, dass das zweite Gehäuseteil einen Dichtsitz aufweist, an dem das Schließglied im geschlossenen Zustand des Ventils anliegt

In einer einfachen Ausgestaltung ist das Schließglied mit dem Stift fest verbunden ist. Der Stift führt hierbei das Schließglied beim Öffnen und Schließen, so dass mit dem Bewegen des Stifts eine gleichdefinierte Bewegung des Schließglieds erfolgt.

In einer vorteilhaften Ausgestaltung lassen sich zusätzliche Bauteile zum Verbinden oder Fixieren des Schließglieds am Stift vermeiden, wenn das Schließglied direkt mit dem Stift verbunden ist. Die Verbindung kann kraftschlüssig, insbesondere durch Aufpressen, formschlüssig, insbesondere durch eine Rastverbindung oder stoffschlüssig, insbesondere durch Schweißen ausgebildet sein.

In einer anderen vorteilhaften Ausgestaltung ist das Schließglied über einen Halter mit dem Stift verbunden. Das hat den Vorteil, dass das Schließglied in Form und Material ausschließlich an seine Funktion angepasst ist, während die Verbindung zum Stift und damit zum Bewegen des Schließglieds ausschließlich über den Halter erfolgt und dieser dementsprechend an diese Funktion angepasst ist.

Erfindungsgemäß besitzt der Stift einen ersten Mitnehmer der das Schließglied in eine Offenstellung bewegt. Durch die Bewegung des Stifts aufgrund des Solenoids, wird der Stift beim Bestromen des Solenoids bewegt. Im unbestromten Zustand des Solenoids wird der Stift durch eine Feder in einer Ausgangsstellung gehalten, oder in eine Ausgangsstellung gebracht, sofern sich der Stift nicht in dieser befindet. Diese Funktion der Feder kann in vorteilhafter Weise für das Bewegen des Schließglieds benutzt werden.

Eine zusätzliche Sicherheit hinsichtlich der Bewegung des Schließglieds und der Fixierung des Schließglieds in einer Schließstellung wird dadurch erreicht, dass der Stift einen zweiten Mitnehmer besitzt, der das Schließglied in einer Schließstellung hält. Das Halten in der Schließstellung setzt ein Bewegen des Schließglieds in die Schließstellung durch den zweiten Mitnehmer zumindest vor eine Teilstrecke der Schließbewegung des Schließglieds voraus. Der zweite Mitnehmer unterstützt hierbei das Bewegen des Schließglieds durch den in der Leitung vorhandenen Druck.

Die Beaufschlagung des Schließglieds lässt sich durch die Mitnehmer reduzieren, wenn die beiden Mitnehmer axial so voneinander beabstandet sind, dass nur ein Mitnehmer in Kontakt mit dem Schließglied ist.

Die Anordnung von zueinander beabstandeten Mitnehmern wird erfindungsgemäß genutzt um ein leichteres Öffnen des Ventils zu ermöglichen. In dem Schließglied ist dazu mindestens eine Bohrung, vorzugsweise bis vier Bohrungen und insbesondere bis acht Bohrungen derart angeordnet, dass der Mitnehmer, der das Schließglied in der Schließstellung hält, die Bohrungen aufgrund seines größeren Außendurchmessers überdeckt. Beim Öffnen des Ventils bewegt sich der Stift und der Mitnehmer gibt die Bohrungen frei, während der andere Mitnehmer das Schließglied noch nicht erreicht hat. Dadurch kein ein Teilstrom durch die Bohrungen in das Ventil strömen und die Druckdifferenz zu beiden Seiten des Schließglieds reduzieren. Mit der verringerten Druckdifferenz ist ein leichteres Öffnen möglich. Das wiederum erlaubt die Verwendung eines weniger leistungsstarken Solenoids, was ein besonders kostengünstiges Ventil zur Folge hat. Sofern ein solcher Solenoid mit kleineren Abmessungen gestaltet werden kann, lässt sich auf diese Weise wertvoller Bauraum einsparen.

Um eine gute und zuverlässige Abdichtung auch in aggressiver Umgebung zu erzielen, hat sich die Ausbildung des Schließglieds aus Polytetrafluorethylen (PTFE) als vorteilhaft herausgestellt. Dadurch lassen sich ein formstabiles und insbesondere im Hinblick auf ein Klemmen reibungsarmes Schließglied vorsehen. Eine sehr gute Dichtwirkung wird jedoch auch mit Dichtungen aus Ethylen-Propylen-Dien-Kautschuk (EPDM), oder Polyphthalamid (PPA) erzielt.

In einer anderen vorteilhaften Ausgestaltung ist das Schließglied zumindest zum Dichtsitz des zweiten Gehäuseteils hin überlappend ausgebildet. Die Überlappung kann beispielsweise stufenförmig oder kontinuierlich, vorzugsweise konisch, ausgebildet sein. Es ist auch denkbar, die überlappende Ausbildung auch zumindest zu einem der Mitnehmer, insbesondere dem Mitnehmer, der das Schließglied in der Schließstellung hält, auszubilden. Die überlappende Ausbildung hat den Vorteil, dass Abnutzungen, Verschleiß der Dichtflächen am Schließglied oder den anderen Bauteilen die Schließfunktion nicht beeinflussen, so dass das erfindungsgemäße Ventil über seine Lebensdauer seine Funktion ohne Beeinträchtigungen erfüllen kann.

Der Dichtsitz am zweiten Gehäuseteil lässt sich besonders einfach realisieren, wenn das zweite Gehäuseteil aus Kunststoff besteht und der Dichtsitz einteilig mit dem zweiten Gehäuseteil ausgebildet ist. Diese Ausgestaltung hat den Vorteil, dass der Gestaltung des Dichtsitzes in weiten Grenzen gezielt ausgebildet werden kann. Weiter lässt sich der Dichtsitz besonders einfach mit der Herstellung des zweiten Gehäuseteils, insbesondere durch Spritzgießen erzeugen.

Ein Durchströmen von einer Leitung zur anderen Leitung wird durch die entsprechende Anordnung des zweiten Gehäuseteils in den Leitungen erreicht. Eine Leckage durch das zweite Gehäuseteil wird gemäß einer vorteilhaften Ausgestaltung dadurch verhindert, dass der Dichtsitz des zweiten Gehäuseteils ein separates Bauteil ist, welches mit dem zweiten Gehäuseteil verbunden ist.

Eine gute Dichtwirkung wird erreicht, wenn die radial umlaufende Dichtfläche am zweiten Gehäuseteil von einer mit dem Gehäuseteil verbundenen Dichtung, vorzugsweise aus PTFE oder EPDM gebildet ist.

An einem Ausführungsbeispiel wird die Erfindung näher beschrieben. Es zeigt in
- Fig. 1: eine Schnittdarstellung des Ventils nach dem Stand der Technik,
- Fig. 2, 3: eine vergrößerte Darstellung eines erfindungsgemäßen Ventils im Bereich des Schließglieds und
- Fig. 4: eine weitere Ausgestaltung des Schließglieds.

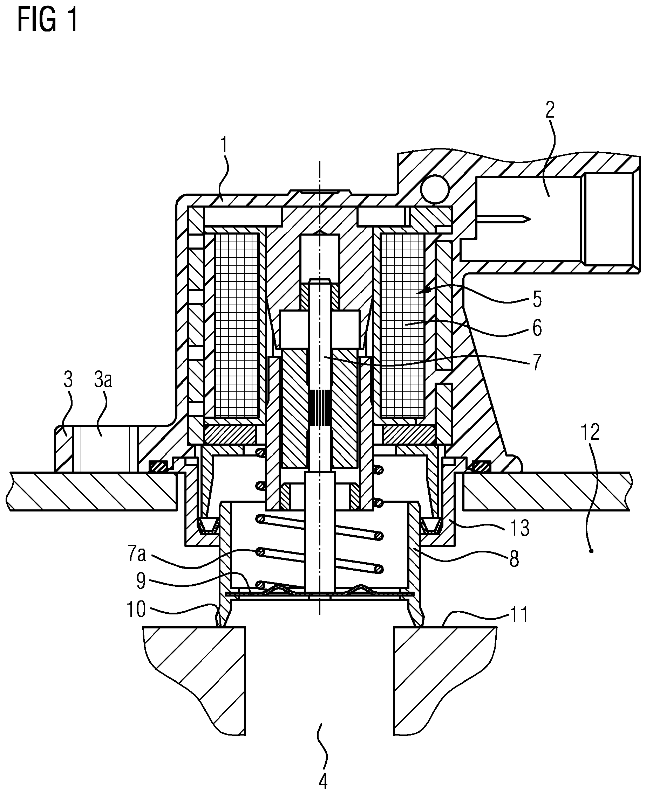

Figur 1 zeigt ein Ventil nach dem Stand der Technik, umfassend ein Gehäuse 1 mit einteilig angeformter Buchse 2 zum elektrischen Verbinden des Ventils. Das Gehäuse 1 besitzt weiter einen angeformten Flansch 3 und drei Bohrungen 3a, über die das Gehäuse 1 an einem nicht dargestellten Turbolader im Bereich der Bypassleitung 4 angeflanscht ist. In der gezeigten Einbaulage schließt sich an den Flansch 3 ein zweites Gehäuseteil 13 an. In dem Gehäuse 1 ist ein Solenoid 5 mit einer Spule 6 und einem Metallstift 7 angeordnet. Der Metallstift 7 ist mit einem topfförmigen Kolben 8 verbunden, der am Umfang seines Bodens 9 eine axial abstehende ringförmige Dichtfläche 10 besitzt. In der gezeigten Schließstellung liegt die Dichtfläche 10 auf dem Ventilsitz 11 an, um die Bypassleitung 4 zu verschließen, so dass kein Medium von aus der Leitung 4 in die Leitung 12 strömen kann. Eine Feder 7a drückt dabei den Kolben 8 in Richtung Ventilsitz 11. Gegen die von der Feder 7a erzeugte Kraft wirkt die aufgrund des Drucks in der Leitung 12 auf den Boden 9 wirkende Kraft.

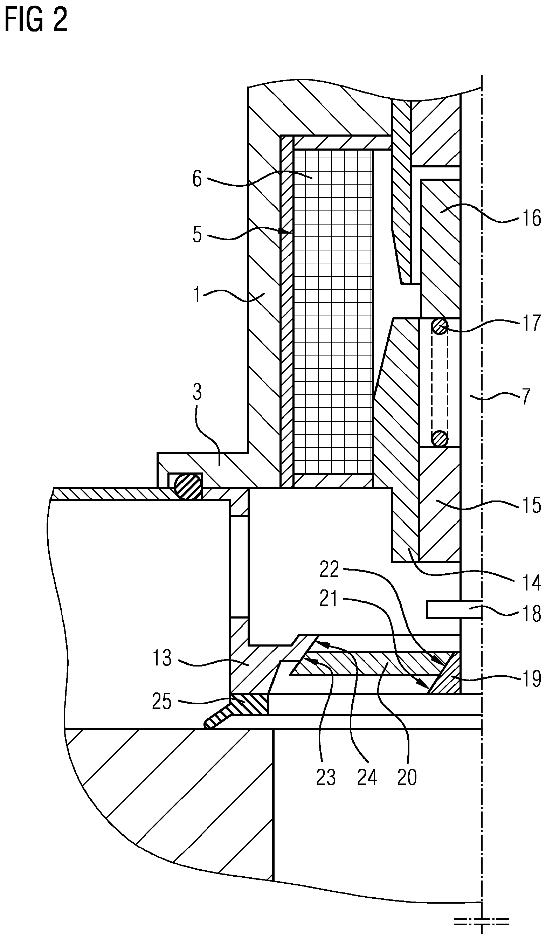

Figur 2 zeigt ein erfindungsgemäßes Ventil mit dem Gehäuse 1 mit dem Solenoid 5 in einer Schließstellung. Der Solenoid 5 besitzt einen unteren Stator 14 in dem eine untere Hülse 15 zur Führung des Metallstifts 7 fest angeordnet ist. Der Stift 7 ist in seinem oberen Bereich mit einer Armatur 16 versehen, die fest am Stift 7 angeordnet ist. Zwischen der Armatur 16 und der unteren Hülse 15 ist eine Spiralfeder 17 vorgesehen. Außerhalb des Solenoids 5 ist an dem Stift 7 ein erster Mitnehmer 18 angeordnet. An seinem freien Ende besitzt der Stift 7 einen zweiten Mitnehmer 19. Beide Mitnehmer 18, 19 sind voneinander soweit beabstandet, dass das zwischen beiden Mitnehmern 18, 19 befindliche Schließglied 20 immer nur mit einem Mitnehmer 19, 18 in Kontakt gelangen kann. Während der erste Mitnehmer 18 eine zylindrische Form besitzt, weist der zweite Mitnehmer 19 eine konische Mantelfläche 21 auf.

In der gezeigten Stellung ist der Solenoid 5 unbestromt. Die Spiralfeder 16 drückt sich an der unteren Hülse 15 ab und drückt die Armatur 16 und damit den Stift 7 nach oben. Dadurch liegt der zweite Mitnehmer 19 an dem Schließglied 20 an, wobei der Mitnehmer 19 von der Feder 17 in dieser Position gehalten wird. Das Schließglied 20 aus PTFE besitzt die Form einer gelochten Scheibe mit einer parallelogrammfömigen Querschnittsfläche. Somit besitzt das Schließglied 20 ebenfalls konische Mantelflächen, wobei die innere Mantelfläche 22 entgegengesetzt zur Mantelfläche 21 des Mitnehmers 19 ausgerichtet ist. Das führt zu einem Überlappen der beiden Mantelflächen 22, 21, was eine besonders gute Dichtwirkung ermöglicht. Die äußere Mantelfläche 23 des Schließglieds 20 liegt an einem Dichtsitz 24 des zweiten Gehäuseteils 13 an. Der Dichtsitz 24 ist einteilig an dem aus Kunststoff bestehenden zweiten Gehäuseteils 13 ausgebildet und besitzt eine zum Schließglied 20 korrespondierende Dichtfläche. Das zweite Gehäuseteil 13 besitzt an seinem dem Gehäuse 1 abgewandten Ende eine weitere Dichtung 25 aus EPDM, die die Leitungen 4, 12 voneinander trennt.

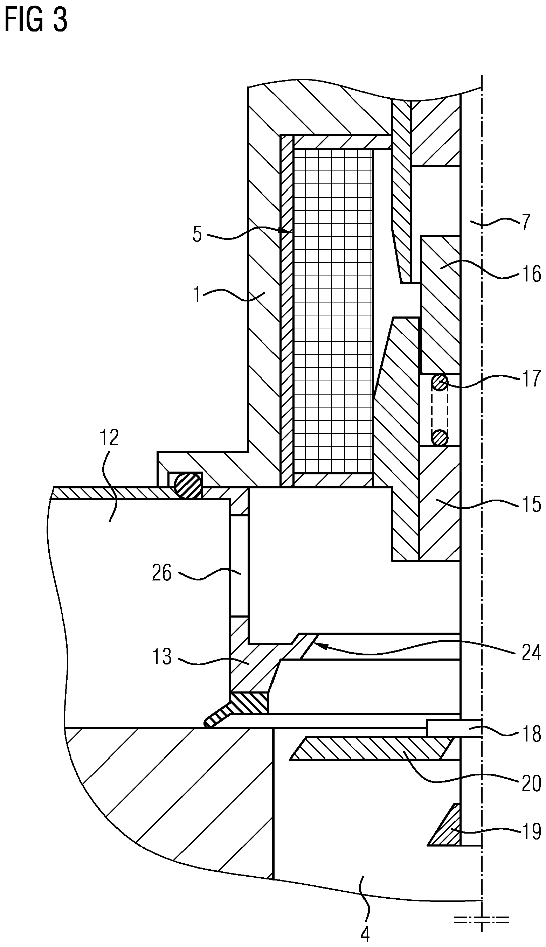

Figur 3 zeigt das erfindungsgemäße Ventil im bestromten Zustand. Die Armatur 16 wird nach unten gezogen und die Spiralfeder 17 zusammengedrückt. In dieser Bewegung tritt der erste Mitnehmer 18 mit dem Schließglied 20 in Kontakt und drückt es nach unten, wodurch es sich vom Dichtsitz 24 des zweiten Gehäuseteils 13 entfernt. Durch die so freigegebene Öffnung kann nun ein Gasstrom von Leitung 4 durch eine Öffnung 26 in der Mantelfläche des zweiten Gehäuseteils 13 in die Leitung 12 fließen.

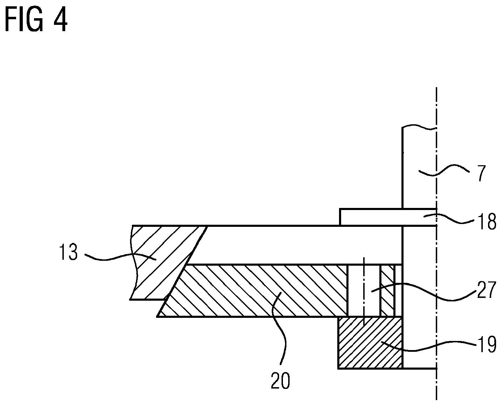

Das Schließglied in Figur 4 besitzt 4 radial innenliegende Bohrungen 27, die so angeordnet sind, dass der zweite Mitnehmer 18 einen größeren Aussendurchmesser aufweist und die Bohrungen 27 auf diese Weise in der Schließstellung überdeckt. Beim Öffnen des Ventils bewegt sich der Stift 7 nach unten, wodurch der zweite Mitnehmer 18 die Bohrungen 27 freigibt, bevor der erste Mitnehmer 18 das Schließglied 20 berührt. Über die Bohrungen 27 kann dadurch bereits ein Teilstrom aus Leitung 4 in das Ventil einströmen. Dadurch erhöht sich der Druck in dem zweiten Gehäuseteil 13, was zu einer Verringerung der Druckdifferenz zwischen Leitung 4 und dem Inneren des zweiten Gehäuseteils 13 führt. Das Verringern der Druckdifferenz ermöglicht ein leichteres Öffnen des Ventils.

## Patentansprüche

1. Ventil mit einem Gehäuse (1), einem in dem Gehäuse angeordneten Solenoid (5), einem von dem Solenoid bewegbaren Stift (7), einem durch die Bewegung des Stifts bewegbaren Schließglied (20), einem mit dem Gehäuse verbundenen zweiten Gehäuseteil (13), welches so angeordnet ist, dass es das Schließglied in der geschlossenen Position des Ventils umgibt, wobei das zweite Gehäuseteil (13) in seiner Mantelfläche eine Öffnung (26) aufweist und an seinem dem Gehäuse (1) abgewandten Ende eine radial umlaufende Dichtfläche (25) besitzt, das zweite Gehäuseteil (13) einen Dichtsitz (24) aufweist, welcher dem Ende des zweiten Gehäuseteils (13) zugeordnet ist, das dem Gehäuse (1) abgewandt ist und an dem das Schließglied (20) im geschlossenen Zustand des Ventils anliegt, **dadurch gekennzeichnet, dass** der Stift (7) einen ersten Mitnehmer (18) besitzt, der das Schließglied (20) in eine Offenstellung bewegt, dass der Stift (7) einen zweiten Mitnehmer (19) besitzt, der das Schließglied (20) in einer Schließstellung hält und dass die beiden Mitnehmer (18, 19) axial so voneinander beabstandet sind, dass nur ein Mitnehmer (18, 19) in Kontakt mit dem Schließglied (20) ist.

2. Ventil nach Anspruch 1, **dadurch gekennzeichnet, dass** das Schließglied (20) mit dem Stift (7) fest verbunden ist.

3. Ventil nach Anspruch 1 oder 2, **dadurch gekennzeichnet, dass** das Schließglied (20) direkt mit dem Stift (7) verbunden ist.

4. Ventil nach zumindest einem der vorhergehenden Ansprüche 1 bis 2, **dadurch gekennzeichnet, dass** das Schließglied (20) über einen Halter mit dem Stift (7) verbunden ist.

5. Ventil nach zumindest einem der vorhergehenden Ansprüche, **dadurch gekennzeichnet, dass** das Schließglied (20) aus PTFE besteht.

6. Ventil nach zumindest einem der vorhergehenden Ansprüche, **dadurch gekennzeichnet, dass** das Schließglied (20) zumindest zum Dichtsitz (24) des zweiten Gehäuseteils (13) überlappend ausgebildet ist.

7. Ventil nach zumindest einem der vorhergehenden Ansprüche, **dadurch gekennzeichnet, dass** das zweite Gehäuseteil (13) aus Kunststoff besteht und der Dichtsitz (24) einteilig mit dem zweiten Gehäuseteil (13) ausgebildet ist.

8. Ventil nach zumindest einem der vorhergehenden Ansprüche 1 bis 7, **dadurch gekennzeichnet, dass** der Dichtsitz (24) ein separates Bauteil ist, welches mit dem zweiten Gehäuseteil (13) verbunden ist.

9. Ventil nach zumindest einem der vorhergehenden Ansprüche, **dadurch gekennzeichnet, dass** die radial umlaufende Dichtfläche am zweiten Gehäuseteil (13) von einer mit dem Gehäuseteil (13) verbundenen Dichtung (25), vorzugsweise aus PTFE oder EPDM gebildet ist.

## Claims

1. Valve having a housing (1), a solenoid (5) arranged in the housing, a pin (7) movable by the solenoid, a closing member (20) movable by the movement of the pin, a second housing part (13) connected to the housing and arranged so as to surround the closing member in the closed position of the valve, wherein the second housing part (13) has an opening (26) in its lateral surface and has a radially encircling sealing surface (25) at its end facing away from the housing (1), the second housing part (13) has a sealing seat (24) which is assigned to the end of the second housing part (13), which faces away from the housing (1) and against which the closing member (20) bears in the closed state of the valve, **characterized in that** the pin (7) has a first driver (18) which moves the closing member (20) into an open position **in that** the pin (7) has a second driver (19) which holds the closing member (20) in a closed position, and **in that** the two drivers (18, 19) are spaced apart axially so that only one driver (18, 19) is in contact with the closing member (20) .

2. Valve according to Claim 1, **characterized in that** the closing member (20) is fixedly connected to the pin (7) .

3. Valve according to Claim 1 or 2, **characterized in that** the closing member (20) is directly connected to the pin (7).

4. Valve according to at least one of the preceding Claims 1 to 2, **characterized in that** the closing member (20) is connected via a holder to the pin (7).

5. Valve according to at least one of the preceding claims, **characterized in that** the closing member (20) is composed of PTFE.

6. Valve according to at least one of the preceding claims, **characterized in that** the closing member (20) is formed so as to overlap at least the sealing seat (24) of the second housing part (13).

7. Valve according to at least one of the preceding claims, **characterized in that** the second housing part (13) is composed of plastic and the sealing seat (24) is formed integrally with the second housing part (13).

8. Valve according to at least one of the preceding Claims 1 to 7, **characterized in that** the sealing seat (24) is a separate component which is connected to the second housing part (13).

9. Valve according to at least one of the preceding claims, **characterized in that** the radially encircling sealing surface on the second housing part (13) is formed by a seal (25), preferably composed of PTFE or EPDM, which is connected to the housing part (13).

## Revendications

1. Vanne comprenant un boîtier (1), un solénoïde (5) disposé dans le boîtier, une broche (7) pouvant être déplacée par l'électroaimant, un élément de fermeture (20) pouvant être déplacé par le mouvement de la broche, une deuxième partie de boîtier reliée au boîtier (13) et disposée de manière à entourer l'élément de fermeture lorsque la vanne est en position fermée, la deuxième partie de boîtier (13) comportant dans sa surface d'enveloppe une ouverture (26) et possédant à son extrémité opposée au boîtier (1) une surface d'étanchéité (25) radialement circonférentielle, la deuxième partie de boîtier (13) comportant un siège d'étanchéité (24) qui est associé à l'extrémité de la deuxième partie de boîtier (13) qui est opposée au boîtier (1) et sur laquelle l'élément de fermeture (20) vient en appui lorsque la vanne est fermée, **caractérisée en ce que** la broche (7) possède un premier entraîneur (18) qui déplace l'élément de fermeture (20) dans une position ouverte, **en ce que** la broche (7) possède un deuxième entraîneur (19) qui maintient l'élément de fermeture (20) dans une position fermée et **en ce que** les deux entraîneurs (18, 19) sont espacés axialement l'un de l'autre de sorte qu'un seul entraîneur (18, 19) est en contact avec l'élément de fermeture (20).

2. Vanne selon la revendication 1, **caractérisée en ce que** l'élément de fermeture (20) est relié de manière fixe à la broche (7).

3. Vanne selon la revendication 1 ou 2, **caractérisée en ce que** l'élément de fermeture (20) est relié directement à la broche (7).

4. Vanne selon l'une au moins des revendications 1 à 2 précédentes, **caractérisée en ce que** l'élément de fermeture (20) est relié à la broche (7) par le biais d'un support.

5. Vanne selon l'une au moins des revendications précédentes, **caractérisée en ce que** l'élément de fermeture (20) est en PTFE.

6. Vanne selon l'une au moins des revendications précédentes, **caractérisée en ce que** l'élément de fermeture (20) est conçu pour recouvrir au moins le siège d'étanchéité (24) de la deuxième partie de boîtier (13).

7. Vanne selon l'une au moins des revendications précédentes, **caractérisée en ce que** la deuxième partie de boîtier (13) est en matière synthétique et le siège d'étanchéité (24) est formé d'une seule pièce avec la deuxième partie de boîtier (13).

8. Vanne selon l'une au moins des revendications 1 à 7 précédentes, **caractérisée en ce que** le siège d'étanchéité (24) est un composant distinct qui est relié à la deuxième partie de boîtier (13).

9. Vanne selon l'une au moins des revendications précédentes, **caractérisée en ce que** la surface d'étanchéité radialement circonférentielle au niveau de la deuxième partie de boîtier (13) est formée par une garniture d'étanchéité (25), de préférence en PTFE ou EPDM, reliée à la partie de boîtier (13).
